# EUROPÄISCHE PATENTSCHRIFT

(11) **EP 4 559 800 B1**
(45) Veröffentlichungstag und Bekanntmachung des Hinweises auf die Patenterteilung: **29.04.2026**
(21) Anmeldenummer: 25170717.0
(22) Anmeldetag: 18.02.2021
(51) Int. Cl.: B63G 8/39, B63G 8/06

(54) **ÜBERWASSERPLATTFORM, INSBESONDERE ZUR VERFOLGUNG VON UNTERSEEBOOTEN**
SURFACE PLATFORM, ESPECIALLY FOR TRACKING SUBMARINES
PLATE-FORME DE SUR-MARIN, EN PARTICULIER POUR LE SUIVI DE SOUS-MARINS

(30) Priorität: 27.02.2020 DE 102020202486
(43) Veröffentlichungstag der Anmeldung: 28.05.2025
(62) Teilanmeldung aus: 21706561.4
(73) Patentinhaber: TKMS GmbH, 24143 Kiel (DE); thyssenkrupp AG, 45143 Essen (DE)
(72) Erfinder: BALLÉ, Jens, 20251 Hamburg (DE)
(74) Vertreter: thyssenkrupp Intellectual Property GmbH

(56) Entgegenhaltungen:
- WO-A1-2019/207263
- DE-A1- 102015 209 723
- DE-B3- 102006 045 686
- FR-A1- 2 768 393
- GB-A- 2 361 458
- KR-A- 20160 028 744
- US-A1- 2014 319 076
- US-A1- 2019 135 387
- GABLER ULRICH: "PROPULSION PLANTS", 1 January 2000, SUBMARINE DESIGN, BERNARD UND GRAEFE VERL, BONN, DE, PAGE(S) 63 - 81, ISBN: 978-3-7637-6202-6, XP007908945

## Beschreibung

Die Erfindung betrifft ein Wasserfahrzeug, welches insbesondere zur Detektion von Unterseebooten oder anderen Kontakten im Wasser ausgebildet ist.

In den letzten dreißig Jahren ist vor allem in Westeuropa die Zahl der Militärschiffe rückgängig. Neuere Einheiten sind oft nicht mehr auf die Unterseebootjagd ausgerichtet, sondern, wie beispielsweise der Begriff Mehrzweckkampfschiff nahelegt, für eine sehr breite Palette an Verwendungen ausgelegt. Auch die Unterseeboote haben ein stark erweitertes Missionsspektrum bei deutlich geringerer Anzahl an Unterseebooten. Für die Jagd nach Unterseebooten wird heute stark auf Helikopter gesetzt. Diese haben jedoch wetter- und kraftstoffbedingt nur eine begrenzte Einsatzdauer.

Daraus ergibt sich heute eine Schwierigkeit, fremde Unterseeboote zu detektieren, zu folgen, zu beobachten und dabei bevorzugt selber unbemerkt zu bleiben. Eine weitere Herausforderung ist weiter, dieses beispielsweise in der flachen Ostsee wie auch in der Nordsee oder Nordatlantik zu ermöglichen.

Aus der US 2015/0210359 A1 ist ein Wasserfahrzeug mit einziehbarem Kiel bekannt.

Aus der US 2019/0016415 A1 ist ein justierbarer Ballast für ein Segelschiff bekannt.

Aus der US 2014/319076 A1 ist ein Unterseeboot zur Bekämpfung von Ölaustritt bekannt.

Aus der DE 10 2006 045686 B3 ist ein unbemanntes Unterwasserfahrzeug bekannt.

Aus der FR 2 768 393 A1 ist ein Verfahren zur Verbesserung der Tarnkappe von konventionellen U-Booten bekannt.

Aus der GB 2 361 458 A ist ein Halbtaucher bekannt.

Aus der KR 2016 0028744 A ist eine Struktur zur Interferenzvermeidung zwischen Schleppsonar und Propeller in einem Unterseeboot sowie ein Unterseeboot mit einer solchen und einem Sonar mit geschleppter Anordnung, ein Ausführverfahren unter Verwendung desselben bekannt.

Aus der US 2019/135387 A1 ist ein Unterseeboot und ein Verfahren zum Betrieb bekannt.

Aus GABLER ULRICH: "PROPULSION PLANTS", 1. Januar 2000 (2000-01-01), SUBMARINE DESIGN, BERNARD UND GRAEFE VERL, BONN, DE, PAGE(S) 63 - 81, XP007908945, ISBN: 978-3-7637-6202-6 sind die Grundlagen des Antriebs von Unterseebooten bekannt.

Aus der WO 2019/207263 A1 ist ein System zum Ausbringen und Einholen eines autonomen Unterwassergeräts und ein Verfahren zur Verwendung bekannt.

Aus der DE 10 2015 209723 A1 ist ein Fluidfahrzeug mit reduzierter Signatur bekannt.

Aufgabe der Erfindung ist es, eine einfache und günstige Plattform zu schaffen, die ein fremdes Unterseeboot auffinden und verfolgen kann.

Gelöst wird diese Aufgabe durch ein Wasserfahrzeug mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Wasserfahrzeug ist als Halbtaucherboot ausgeführt. Das Wasserfahrzeug ist für den unbemannten Betrieb ausgelegt. Dieses bedeutet, dass das Wasserfahrzeug autonom oder ferngesteuert betrieben werden kann. Bevorzugt erfolgt ein ferngesteuerter Betreib. Es ist jedoch üblich, das auch Wasserfahrzeuge, die für den unbemannten Betrieb ausgelegt sind, beispielsweise einen Fahrstand für einen manuellen Fahrbetrieb aufweisen. Dieses kann beispielsweise zeitweise genutzt werden, um aus rechtlichen Gründen ein sofortiges menschliches Eingreifen zu ermöglichen. Zum anderen kann der manuelle Betrieb für Operationsmodi verwendet werden, in denen eine Automatisierung oder Fernsteuerung aufwändig oder ineffektiv wäre. Beispielsweise kann der Fahrbetrieb in einen Hafen hinein oder aus einem Hafen hinaus manuell erfolgen, insbesondere da hier ein hohes Maß an Interaktion zu anderen Wasserfahrzeugen notwendig sein kann. Ein solcher Fahrbetrieb kann, wie auch bei Hochseeschiffen üblich, von einem Lotsen übernommen werden.

Das Wasserfahrzeug weist einen Schiffsrumpf und einen auf dem Schiffsrumpf angeordneten Turm auf. Das Wasserfahrzeug ist ein Halbtaucherboot, was bedeutet, dass der weit überwiegende Teil der den Auftrieb erzeugenden Konstruktion unterhalb der Wasserlinie ist. Im Fall dieser Erfindung ist der Schiffrumpf im normalen halbgetauchten Betrieb vollständig unter Wasser angeordnet, während der auf dem Schiffsrumpf angeordnete Turm fortwährend über die Wasserlinie hinausragt. Im Unterschied zu anderen Wasserfahrzeugen ist dabei der Schiffsrumpf, abgesehen von der Anschlussfläche des Turms, vollständig von Wasser umgeben, so dass bevorzugt mindestens 3/4 , bevorzugt mindestens 7/8, ganz besonders bevorzugt 11/12 der Oberfläche des Schiffsrumpfs im Kontakt mit dem umgebenden Wasser sind. Der Schiffsrumpf weist wenigstens einen ersten wasserdichten Rumpfbereich und wenigstens einen ersten wasserdurchfluteten Rumpfbereich auf. Das Wasserfahrzeug weist eine Antriebseinheit in dem ersten wasserdichten Rumpfbereich auf. Das Wasserfahrzeug weist wenigstens ein erstes Sonar zur Detektion von Unterseebooten auf.

Den erfindungsgemäßen Halbtaucherboot kann man auch als Einrumpfboot mit geringer Wasserlinienfläche in Analogie zu einem Doppelrumpf mit geringer Wasserlinienfläche (Small Waterplane Area Twin Hull (SWATH)) bezeichnen, wobei eben lediglich ein Teil des Turmes über die Wasserlinie ragt. Der größte Teil des Wasserfahrzeugs liegt unter der Wasserlinie, der über der Wasserlinie liegende Teil des Turmes ist dagegen klein. Der Schiffstumpf ist bevorzugt torpedoförmig ausgebildet.

Das erfindungsgemäße Wasserfahrzeug weist eine Reihe von Vorteilen auf. Zum einen kann es aufgrund der Sonarfähigkeit insbesondere in einem Flottenverband die Aufgabe der Detektion von Unterseebooten übernehmen, da zunehmend Fregatten und Zerstörer ohne diese Kapazität im Dienst sind, beziehungsweise gebaut werden, da diese Schiffe zunehmend breitere Aufgabenstellungen abdecken müssen. Zum anderen ist das Wasserfahrzeug jedoch durch die klare Fokussierung auf einzig die Entdeckung von feindlichen Unterseebooten in Kombination mit einer unbemannten Bauweise vergleichsweise klein, einfach und günstig.

Des Weiteren kann durch die unbemannte Bauweise ein erfindungsgemäßes Wasserfahrzeug auch in einem größeren Abstand zu einem Schiffsverband eingesetzt werden, da eine solche Einheit nicht im vollständigen Schutz des Schiffsverbandes gehalten werden muss, da ein Verlust eines unbemannten Objektes deutlich weniger schwerwiegend ist.

Die Bauweise als Halbtaucherboot hat zwei weitere Vorteile. Zum einen ragt nur ein kleiner Teil, der obere Teil des Turms über die Wasseroberfläche, was den Radarquerschnitt (RCS) gegenüber vergleichbaren reinen Überwasserschiffen senkt, beispielsweise dem Anti-Submarine Warfare Continuous Trail Unmanned Vessel (ACTUV) der United States Navy, und damit die Entdeckungswahrscheinlichkeit durch andere Überwassereinheiten oder Flugzeuge reduziert. Zum anderen hat das Halbtaucherboot gegenüber einer Bauweise als Unterwasserfahrzeug den Vorteil, dass aufgrund des ständigen Kontakts zur Oberfläche immer Sauerstoff aus der Atmosphäre zur Verfügung steht und auch Abgase an die Atmosphäre abgegeben werden können und dass ein Druckkörper nur für sehr geringe Tiefe ausgelegt sein muss. Hierdurch ist die Bauweise eines Halbtaucherboots vergleichsweise einfach und wenig aufwändig.

**In** einer weiteren Ausführungsform der Erfindung ist der Halbtaucherboot als Einrumpfboot mit geringer Wasserlinienfläche ausgebildet, wobei das Halbtaucherboot nicht auftauchen, also nicht mit dem Schiffsrumpf aus eigener Kraft die Wasserlinie durchbrechen kann. Hierdurch kann auch Ballasttanks in größerem Umfang verzichtet werden, lediglich Trimmtanks, die auch Gewichtsveränderungen durch Treibstoffverbrauch kompensieren können, sind vorteilhafterweise vorhanden. Hierdurch kann der Tiefgang konstant gehalten werden.

**In** einer weiteren Ausführungsform der Erfindung weist das Wasserfahrzeug ein Schleppsonar auf. Eine Aufnahmevorrichtung für das Schleppsonar ist in dem ersten wasserdurchfluteten Rumpfbereich angeordnet. Ein Schleppsonar ist besonders gut als erstes Sonar im Sinne der Erfindung geeignet, da dieses aufgrund seiner Länge und dem Abstand zu allen auf dem Wasserfahrzeug Geräusche erzeugenden Objekten eine sehr gute passive Erfassung von Unterseebooten ermöglicht. Ferner ist das Schleppsonar nicht auf die Länge des Wasserfahrzeuges beschränkt, wodurch durch die größere Erstreckung der Erfassung eine Ortung, also eine Positionsbestimmung, eines Kontakts erleichtert wird. Die Aufnahmevorrichtung ist beispielsweise und bevorzugt eine Winde, auf die das Schleppsonar aufgewickelt wird, um dieses an Bord zu nehmen.

In einer weiteren Ausführungsform der Erfindung weist das Wasserfahrzeug eine Führung für das Schleppsonar auf. Durch eine Führung kann das Schleppsonar innerhalb einer geschützten Umgebung an dem Propeller vorbeigeführt werden. Hierdurch wird verhindert, dass das Schleppsonar an den Propeller kommen und dabei beschädigt werden kann. Die Führung kann an einen Skeg oder den Schiffsrumpf hydrodynamisch, also durch einen stetigen Übergang der Oberfläche, angeformt sein und sie kann so lang sein, dass sie achtern über den Propeller hinausragt, bevorzugt mindestens den halben Propellerdurchmesser über den Propeller hinausragt.

Erfindungsgemäß weist das Wasserfahrzeug im Turm wenigstens einen ersten wasserdichten Turmbereich auf. Der erste wasserdichte Turmbereich ist vorteilhaft, da aufgrund der Bauweise ansonsten Wellen leicht an oder gar über den Turm gelangen können und somit Wasser eindringen könnte. Um die im Turm angeordneten Vorrichtungen zu schützen und auch um eine ungewollte Gewichtszunahme im hoch gelegenen Turm zu verhindern, ist hier der erste wasserdichte Turmbereich angeordnet. Bevorzugt verschließt der erste wasserdichte Turmbereich den Turm im horizontalen Querschnitt, sodass kein Wasser von außen durch den Turm in den Schiffrumpf gelangen kann. Hierdurch wird ein Betrieb des Wasserfahrzeugs auch möglich, wenn die Wellen höher als der Turm oberhalb der Wasserlinie werden.

In einer weiteren Ausführungsform der Erfindung ist zwischen dem ersten wasserdichten Turmbereich und dem ersten wasserdichten Rumpfbereich eine wasserdichte Verbindung, beispielsweise in Form einer Schleuse.

Erfindungsgemäß weist der Turm oberhalb der Wasserlinie eine Verbreiterung auf. Die Verbreiterung kann in Schiffslängsrichtung, quer zur Schiffslängsrichtung oder sowohl in Schiffslängsrichtung als auch quer zur Schiffslängsrichtung sein. Hierdurch kann ein größerer Innenraum im Turm geschaffen werden, der oberhalb der Wasserlinie liegt, die Wasserlinienfläche, also die Fläche in der die Wasserlinie durchbrochen wird, wird dadurch minimal gehalten. Der größere Innenraum kann dabei bevorzugt wasserdicht ausgeführt sein. Weiter kann der größere Innenraum so hoch sein, dass eine Person hier aufrecht stehen kann. Durch den größeren Innenraum kann zusätzlicher Platz, beispielsweise für den Aufenthalt von Personen oder für einen manuellen Fahrstand geschaffen werden.

In einer weiteren Ausführungsform der Erfindung weist das Wasserfahrzeug eine Sonarauswerteelektronik auf. Die Sonarauswerteelektronik ist vorzugsweise im ersten wasserdichten Turmbereich angeordnet und mit dem Schleppsonar oder anderen Sonareinrichtungen verbunden, um die Signale des Schleppsonars oder der Sonareinrichtungen auszuwerten. Zwar wäre eine Anordnung in der Nähe des ersten Sonars und damit innerhalb eines wasserdichten Rumpfbereiches aufgrund geringerer Signalweglängen sinnvoll, auf der anderen Seite erzeugt die Antriebseinheit im Schiffsrumpf im Betrieb Wärme, was für die Elektronik problematisch ist. Daher ist eine Trennung zwischen der Antriebseinheit im wasserdichten Rumpfbereich und der Sonarauswerteelektronik im wasserdichten Turmbereich zielführend.

Der Begriff Sonarauswerteelektronik ist im Sinne der Erfindung breit zu verstehen. Da die bevorzugte Betriebsart für das erfindungsgemäße Wasserfahrzeug eine ferngesteuerte Betriebsweise ist, werden die durch die Sonarauswerteelektronik verarbeiteten Sonardaten an eine nicht auf dem Wasserfahrzeug liegende Einheit per Funk übertragen und dort weiterverarbeitet. Die Einheit kann dabei beispielsweise ein Schiff oder in eine an Land befindliche Basis sein, welche anschließend beispielsweise auch eine Zielbekämpfung, beispielsweise mit einem Bordhubschrauber, veranlassen kann. Daher kann die Aufarbeitung der Sonardaten auch nur soweit erfolgen, dass die Rohdaten soweit aufbereitet werden, dass diese schneller, beispielsweise in Echtzeit und/oder verschlüsselt an die Einheit mittels geeigneter Kommunikationseinrichtungen übertragen werden können.

In einer weiteren Ausführungsform der Erfindung weist die Antriebseinheit einen Dieselgenerator und einen Fahrmotor auf. Zur Versorgung des Dieselgenerators weist der Turm wenigstens eine Frischluftzufuhr und eine Abgasabluft auf. Besonders bevorzugt ist der Fahrmotor ein elektrischer Fahrmotor.

In einer weiteren Ausführungsform der Erfindung ist der Dieselgenerator in einem ersten wasserdichten Rumpfbereich und der Fahrmotor in einem zweiten wasserdichten Rumpfbereich angeordnet.

In einer weiteren Ausführungsform weist der wasserdichte Rumpfbereich Aufnahmen für Transportschienen auf. Im Wartungsfall können in diese Aufnahmen Transportschienen eingebracht werden, um Komponenten in Längsrichtung verschieben zu können. Für den Wartungsfall weist der Rumpf bevorzugt mindestens ein Luk auf. Durch die Transportschienen können die Komponenten unterhalb des Luks angeordnet werden und aus dem Schiffsrumpf herausgehoben werden, so dass ein Auftrennen des Schiffsrumpfs nicht erforderlich ist. Gegebenenfalls kann ein Drehen der Komponenten notwendig sein, um das Luk so klein wie möglich halten zu können.

In einer weiteren Ausführungsform der Erfindung weist das Wasserfahrzeug einen Akkumulator auf. Diese kann benutzt werden, um Leistungsschwankungen besser auszugleichen. Bevorzugt ist der Akkumulator nicht für einen über Stunde oder Tage dauernden Betrieb des gesamten Wasserfahrzeugs ausgelegt, wie dieses bei Unterseebooten der Fall ist. Hierdurch wird erheblich an Größe und Gewicht gespart. Dieses ist bei einem Halbtaucherboot aufgrund der ständigen Verfügbarkeit von Sauerstoff aus der Umgebung und der Möglichkeit zur Abgabe von Abgasen auch nicht notwendig.

In einer weiteren Ausführungsform der Erfindung weist die Abgasabluft einen Schwanenhals auf. Ein Schwanenhals bewirkt, dass im Falle des Überspülens des Turmes und damit auch des Auspuffs als Ende der Abgasabluft eindringendes Wasser zunächst entgegen der Richtung der herausströmenden Abgase nach oben steigen muss, bevor das Wasser in den abfallenden Bereich und damit in dem Schiffrumpf gelangen kann. Ohne den Schwanenhals könnte das Wasser direkt nach unten in den Schiffrumpf zum Dieselgenerator gelangen.

In einer weiteren Ausführungsform der Erfindung ist wenigstens ein erster Dieseltank in dem wasserdurchfluteten Rumpfbereich angeordnet. Bevorzugt sind alle Dieseltanks in dem wasserdurchfluteten Rumpfbereich angeordnet. Insbesondere sind die Dieseltanks entweder paarweise steuerbord und backbord gegenüberliegend oder auf der Längsachse angeordnet. Dieses ermöglicht einen gleichmäßigen Verbrauch von Treibstoff, welcher die Lage des Wasserfahrzeugs geringstmöglich beeinflusst und die Notwendigkeit der Trimmung durch den Verbrauch von Treibstoff minimiert.

In einer weiteren Ausführungsform der Erfindung sind die Dieseltanks selbstkompensierend ausgebildet. Beispielsweise und insbesondere weisen die Dieseltanks jeweils wenigstens eine Kunststoffhülle im Inneren auf, wobei in die Kunststoffhülle Umgebungswasser eingebracht wird, während auf der anderen Seite der Treibstoff aus den Dieseltanks entnommen wird. Beim Betanken kehrt sich der Vorgang um., der Treibstoff strömt in die Dieseltanks und drückt das Wasser aus den Kunststoffhüllen zurück in die Umgebung. Hierdurch ändert sich die Trimmung nicht aufgrund des Gewichts des verbrauchten Treibstoffes, sondern nur aufgrund der Gewichtsdifferenz zwischen dem Treibstoff und dem den Treibstoff ersetzenden Wasser. Hierdurch kann das Trimmsystem des Wasserfahrzeugs entsprechend kleiner und einfacher ausgelegt sein.

In einer weiteren Ausführungsform der Erfindung weist das Wasserfahrzeug einen nach unten ausfahrbaren Kiel auf. In dem nach unten ausfahrbarem Kiel ist wenigstens eine erste Gruppe von Sonarsensoren angeordnet. Der ausfahrbare Kiel ist wenigstens 2 m, bevorzugt wenigstes 3 m, besonders bevorzugt wenigstens 5 m ausfahrbar. Der ausfahrbare Kiel ist höchstens 15 m, bevorzugt höchstens 10 m ausfahrbar. Die Sonarsensoren sind zueinander in einer festen räumlichen Beziehung, das heißt, die Position aller Sensoren ist bekannt und konstant. Natürlich kann es beispielsweise durch Temperaturänderungen zu Veränderungen kommen, diese sind jedoch gering und im Allgemeinen vernachlässigbar. Bevorzugt weist die erste Gruppe von Sonarsensoren eine Länge von 5 m bis 30 m, besonders bevorzugt von 10 m bis 20 m auf. Bevorzugt weist die erste Gruppe von Sonarsensoren 50 bis 500 starr zueinander angeordnete Hydrophone auf, besonders bevorzugt 100 bis 250 starr zueinander angeordnete Hydrophone. Beispielsweise und insbesondere ist die erste Gruppe von Sonarsensoren auf einen Frequenzbereich von 10 Hz bis 5 kHz ausgelegt.

Vorteil ist, dass das Sonar somit von einer vergleichsweise kleinen Plattform weiter nach unten und somit weiter weg von der Wasseroberfläche platziert ist. Zwar sind Schleppsonare bekannt, die dieses auch ermöglichen, jedoch haben Schleppsonare auch Nachteile. Zum einen sind die Hydrophone in einem Schleppsonar nicht zueinander wirklich ortsfest. Zum anderen kann sich das Schleppsonar bewegen, es kann durchhängen, es kann gestreckt, also in der Länge verändert werden. Neben diesen Punkten, welche den Abstand der Hydrophone zueinander beeinflusst, kann ein Schleppsonar auch eine Behinderung darstellen und in flachem Wasser sich gar verfangen. Wird die erste Gruppe von Sonarsensoren jedoch in einen ausfahrbaren Kiel integriert, so entfallen diese Probleme und es lässt sich ein klareres Sonarbild erstellen.

Hierdurch kann das erfindungsgemäße Wasserfahrzeug eine derzeit bestehende Fähigkeitslücke in den aktuellen Flotten schließen, indem eine einfache und damit kostengünstige Plattform bereitgestellt wird, mit der ergänzend die notwendigen Fähigkeiten ergänzt werden können.

In einer weiteren Ausführungsform der Erfindung weist der nach unten ausfahrbare Kiel eine erste Gruppe von Sonarsensoren und eine zweite Gruppe von Sonarsensoren auf, wobei die erste Gruppe von Sonarsensoren und die zweite Gruppe von Sonarsensoren in Längsrichtung nebeneinander angeordnet sind und wobei die Haupterfassungsebene der ersten Gruppe von Sonarsensoren nach steuerbord und Richtung Meeresgrund, bevorzugt in einem Winkel von 35 ° ± 20 ° nach unten gerichtet ist und wobei die Haupterfassungsebene der zweiten Gruppe von Sonarsensoren nach backbord und Richtung Meeresgrund, bevorzugt in einem Winkel von 35 ° ± 20 ° nach unten gerichtet ist. Hierdurch wird eine optimale Ortung von getauchten Unterseebooten ermöglicht.

In einer weiteren Ausführungsform der Erfindung ist der ausfahrbare Kiel wenigstens 2 m, bevorzugt wenigstes 3 m, besonders bevorzugt wenigstens 5 m ausfahrbar ist. Weiter ist der ausfahrbare Kiel höchstens 15 m, bevorzugt höchstens 10 m ausfahrbar ist. Durch diese Größenordnung stellt eine deutliche Verbesserung der Sonarleistung dar. Eine größere Entfernung würde jedoch zu massive Führungselemente benötigen, um die relative Position der ersten Gruppe und optional der zweiten Gruppe von Sonarsensoren relativ zum Wasserfahrzeug, beispielsweise bei Seitenströmungen, sicherzustellen. Eine Verbiegung hier um nur 1 ° kann bei einer Entfernung zum Ziel von 50 Seemeilen zu einer Fehlortung um knapp eine Seemeile führen. Alternativ müsste man die exakte Position des ausfahrbaren Kiels zum Rumpf des Wasserahrzeugs erfassen, um diesen Fehler auszugleichen.

In einer weiteren Ausführungsform der Erfindung weist der ausfahrbare Kiel ein Schleppsonar auf. Das Schleppsonar kann ein passives Schleppsonar sein. Es kann sich aber auch um ein aktives Schleppsonar handeln. Beispielsweise und insbesondere hat das Schleppsonar eine Länge von 200 m bis 1500 m. Aus Gewichts- und stabilitätsgründen kann es vorteilhaft sein, wenn der ausfahrbare Kiel keine Vorrichtung zur Wiederaufnahme des Schleppsonars aufweist, sondern wenn das Schleppsonar durch ein Begleitschiff angebracht und abgenommen wird.

Erfindungsgemäß durchtrennt der Turm bei halbgetauchter Fahrt die Wasseroberfläche. Hierdurch ist bei halbgetauchter Fahrt der eigentliche Schiffskörper vollständig unter Wasser. Diese Ausführungsform hat als wichtigsten Vorteil eine Minimierung der Vertikalbewegungen des Wasserfahrzeuges im Seegang und damit Unabhängigkeit vom Seegang. Diese Seegangsfähigkeit kommt wieder der verbesserten Sonareigenschaft des Wasserfahrzeugs zugute, ohne dabei gleich ein Unterseeboot mit einem aufwändigen Druckkörper bauen zu müssen.

In einer weiteren Ausführungsform der Erfindung weist das Wasserfahrzeug wenigstens eine Regelzelle zur Kontrolle des Tiefgangs auf. Besonders bevorzugt weist das Wasserfahrzeug eine erste Regelzelle umseitig und eine zweite Regelzelle heckseitig auf. Über die Regelzelle kann insbesondere bei halbgetauchter Fahrt Tiefgang durch aktive Steuerung konstant gehalten werden.

In einer weiteren Ausführungsform der Erfindung ist das Wasserfahrzeug dieselangetrieben. Durch die halbgetauchte Form ist eine ständige Versorgung mit Frischluft und die Abfuhr der Abgase einfach möglich. Gleichzeitig sind Dieselgeneratoren gut verfügbar, zuverlässig und auch auf See leicht mit neuem Treibstoff zu versorgen, da dieses bereits für die bestehenden Schiffe vorhanden ist. Besonders bevorzugt weist das Wasserfahrzeug zwei Dieselgeneratoren auf, um die Redundanz zu gewährleisten.

In einer weiteren Ausführungsform der Erfindung weist das Wasserfahrzeug einen elektrischen Fahrmotor auf.

In einer weiteren Ausführungsform weist das Wasserfahrzeug einen Propeller auf, welcher über eine Welle mit dem Fahrmotor verbunden ist. Besonders bevorzugt weist das Wasserfahrzeug zwei, auch einer Achse montierte, gegenläufige Propeller auf. Durch die Verwendung von zwei gegenläufigen Propellern wird kein Drehmoment auf das Wasserfahrzeug erzeugt. In einer weiteren bevorzugten Ausführungsform ist der Propeller beziehungsweise sind die zwei Propeller mit einem Gehäuse ummantelt, sodass sich ein Wasserstrahlantrieb ergibt.

In einer weiteren Ausführungsform der Erfindung weist das Wasserfahrzeug einen Akkumulator zur Speicherung von elektrischer Energie auf. Insbesondere in Kombination mit einem Dieselgenerator und einem elektrischen Fahrmotor kann so zeitweise, beispielsweise für einen Sprint, mehr Energie für eine höhere Geschwindigkeit zur Verfügung gestellt werden.

In einer weiteren Ausführungsform der Erfindung weist das Wasserfahrzeug zusätzlich ein Bugsonar mit einer kreisförmigen Hydrophonanordnung auf.

In einer weiteren Ausführungsform der Erfindung ist das Wasserfahrzeug mit eingezogenem Kiel in aufgetauchtem Zustand fahrbar. Im aufgetauchten Zustand durchbricht der Schiffskörper, welcher in halbgetauchten Zustand vollständig unter Wasser angeordnet ist, die Wasseroberfläche. Hierdurch und durch das Einziehen des Kiels wird der Tiefgang deutlich reduziert, was eine Fahrt auch in flachem Gewässer oder im Hafen erlaubt. Insbesondere ist hierfür ein manueller Fahrstand am oberen Ende des Turms angeordnet.

In einer weiteren Ausführungsform der Erfindung ist das Wasserfahrzeug ein unbemanntes Wasserfahrzeug. Das Wasserfahrzeug weist eine erste Kommunikationsvorrichtung auf, wobei die erste Kommunikationsvorrichtung permanent oberhalb der Wasseroberfläche angeordnet ist. Die Ausführung als unbemanntes Wasserfahrzeug und damit der Verzicht auf jede Vorrichtung zur Unterstützung einer Besatzung ermöglicht eine kleinere und damit sehr viel kostengünstige Plattform. Da das Wasserfahrzeug immer einen Teil oberhalb der Wasserlinie aufweist, kann hier leicht eine erste Kommunikationsvorrichtung angeordnet werden, beispielsweise eine Satellitenkommunikation. Hierdurch kann das Wasserfahrzeug jederzeit zum einen ferngesteuert werden, selbst wenn das Wasserfahrzeug über autonome Betriebsweise verfügt. Zum anderen kann das Wasserfahrzeug über die erste Kommunikationsvorrichtung auch Kontaktdaten, insbesondere eines verfolgten Unterseebootes, an den Rest der Flotte übertragen.

In einer weiteren Ausführungsform der Erfindung weist das Wasserfahrzeug eine zweite Kommunikationsvorrichtung auf. Beispielsweise und bevorzugt ist die erste Kommunikationsvorrichtung zur langreichweitigen Kommunikation, beispielsweise über Satellitenkommunikation, ausgebildet und die zweite Kommunikationsvorrichtung zur kurzreichweitigen Kommunikation, beispielsweise mittels Funk. Hierdurch kann ein Schiff, beispielsweise ein Kreuzer, ein Zerstörer, eine Fregatte, eine Korvette oder auch ein Einsatzgruppenversorger die Führung und Fernsteuerung des Wasserfahrzeugs insbesondere auf Sichtweite übernehmen. Um diese Verbindung weiter abzusichern, kann die zweite Kommunikationsvorrichtung auch eine optische Kommunikationsvorrichtung sein.

In einer weiteren Ausführungsform der Erfindung weist das Wasserfahrzeug wenigstens einen Effektor, insbesondere ein Leichtgewichtstorpedo, auf. Sollte beispielweise ein vom Wasserfahrzeug verfolgtes Unterseeboot sich einer kritischen Einrichtung nähern, so könnte, insbesondere ferngesteuert, der Effektor eingesetzt werden.

In einer weiteren Ausführungsform der Erfindung weist das Wasserfahrzeug ein aktives Sonar auf. Hierdurch wird es in Kooperation mit einem weiteren Wasserfahrzeug, auch mit einem weiteren erfindungsgemäßen Wasserfahrzeug, möglich kooperative bistatische Ortungsverfahren einzusetzen und hierdurch auch signaturoptimierte Unterseeboote präzise zu orten. Vorteil ist, wenn das aktiv emittierende erfindungsgemäße Wasserfahrzeug als unbemannte und vergleichsweise kostengünstige Plattform ausgeführt ist, da der aktive Sender bei einem bistatischen Verfahren praktisch automatisch entdeckt wird und daher dem höchsten Risiko der Zerstörung ausgesetzt ist.

In einer weiteren Ausführungsform der Erfindung dient das erfindungsgemäße Wasserfahrzeug dazu, einem Konvoi Fähigkeiten zur Detektion von Unterseebooten hinzuzufügen. Viele heute eingesetzte Schiffe sind nicht mit der vollen Sonarkapazität ausgestattet, um Unterseeboote zu orten. Eine Möglichkeit zur Bekämpfung weist jedoch praktisch jedes Schiff auf, welches einen Bordhelikopter tragen kann. Somit kann durch die Kombination eines erfindungsgemäßen Wasserfahrzeugs mit einem Schiff mit einem Bordhelikopter ein effizienter Schutz gegen Unterseeboote für einen Konvoi geschaffen werden.

In einer weiteren Ausführungsform der Erfindung weist der Schiffsrumpf eine Außenhülle aus einem faserverstärken Kunststoff auf. Eine derartige Bauweise ist für Unterseeboote üblich, bei der eine innen liegende Hülle durch einen Druckkörper gebildet wird und zwischen dem Druckkörper und der Außenhülle ein wasserdurchfluteter Bereich liegt, in dem beispielsweise Sensoren oder Treibstofftanks angeordnet sein können.

In einer weiteren Ausführungsform der Erfindung weist das Wasserfahrzeug eine tragende Rahmenstruktur aufweist. An der Rahmenstruktur sind vorzugsweise sowohl die Außenhülle als auch die druckstabile Hülle des wasserdichten Rumpfbereichs angeordnet und tragend miteinander verbunden.

In einer weiteren Ausführungsform der Erfindung weist das Wasserfahrzeug eine Verdrängung von 100 t bis 1000 t, bevorzugt von 150 t bis 500 t, weiter bevorzugt von 200 t bis 400 t auf. Diese Größe ermöglicht einen optimalen Kompromiss für eine hohe Standzeit auf See, insbesondere für eine unbemannte Plattform, bei gleichzeitig geringen Kosten.

**In** einer weiteren Ausführungsform der Erfindung weist das Wasserfahrzeug eine Länge von 20 m bis 60 m auf.

**In** einer weiteren Ausführungsform der Erfindung weist das Wasserfahrzeug im aufgetauchten Zustand einen Tiefgang von 3 m bis 7 m auf, im halbgetauchten Zustand einen Tiefgang von 10 m bis 18 m. Je tiefer der Tiefgang im halbgetauchten Zustand ist (mit ausgefahrenem Kiel), umso tiefer sind die Sonarsensoren und so stabiler sind diese gegenüber der Bewegung der Wasseroberfläche. Gleichzeitig ermöglicht ein geringer Tiefgang im aufgetauchtem Zustand mit eingefahrenem Kiel eine gute Bewegbarkeit im Flachwasser und den Zugang zu allen Häfen.

In einer weiteren Ausführungsform der Erfindung weist das Wasserfahrzeug Unterwassereffektoren auf. Insbesondere weist das Wasserfahrzeug Leichtgewichtstorpedos, beispielsweise mit einem Durchmesser von 325 mm, auf. Diese werden typischer Weise von Hubschraubern, Flugzeugen oder Überwassereinheiten zur Bekämpfung von Unterseebooten eingesetzt. Alternativ oder zusätzlich kann das Wasserfahrzeug Wasserbomben als Unterwassereffektoren aufweisen. Besonders bevorzugt wird hierzu das Wasserfahrzeug in einem ferngesteuerten Modus betrieben, sodass der Einsatz der Unterwassereffektoren durch einen Menschen ferngesteuert autorisiert werden kann und muss.

In einer weiteren Ausführungsform der Erfindung weist das Wasserfahrzeug Überwassereffektoren auf. Insbesondere weist das Wasserfahrzeug ein Nahbereichsverteidigungssystem als Überwassereffektor auf. Vorteil dieses Systems ist es, dass sowohl Luftfahrzeuge als auch kleine Überwasserfahrzeuge, beispielsweise Schlauchboote, effektiv im Nahbereich bekämpft werden können. Besonders bevorzugt wird hierzu das Wasserfahrzeug in einem ferngesteuerten Modus betrieben, sodass der Einsatz der Überwassereffektoren durch einen Menschen ferngesteuert autorisiert werden kann und muss.

In einer weiteren Ausführungsform der Erfindung ist das Wasserfahrzeug zur Aufnahme eines Minengürtels ausgebildet, wie diese beispielsweise von der Unterseeboot-Klasse 206 bekannt sind. Hierdurch kann das Wasserfahrzeug im Ausnahmefall auch für einen weiteren Zweck, der Unterseebootjagd durch Verlegen von Minen, eingesetzt werden.

Nachfolgend ist das erfindungsgemäße Wasserfahrzeug anhand eines in den Zeichnungen dargestellten Ausführungsbeispiels näher erläutert.
Fig. 1 erstes Wasserfahrzeug in halbgetauchtem Zustand
Fig. 2 erstes Wasserfahrzeug im aufgetauchten Zustand
Fig. 3 zweites Wasserfahrzeug

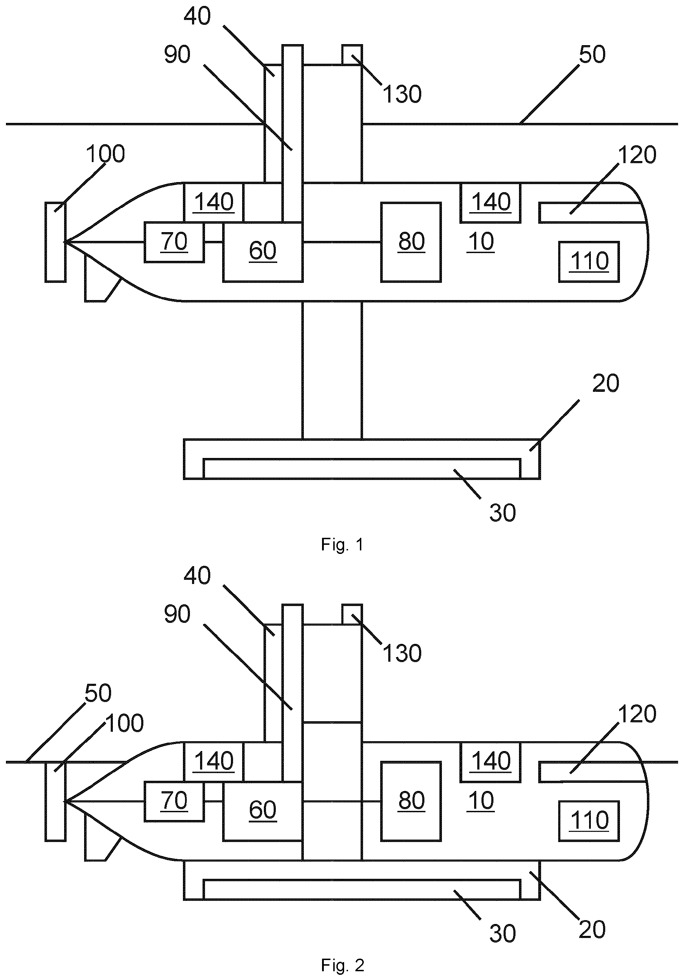

In Fig. 1 ist ein erstes Wasserfahrzeug 10 in halbgetauchtem Zustand und mit ausgefahrenem Kiel 20 gezeigt, in Fig. 2 ist das erste Wasserfahrzeug 10 in aufgetauchtem Zustand mit eingefahrenem Kiel 20 gezeigt.

Das erste Wasserfahrzeug 10 hat einen Kiel 20 mit einer ersten Gruppe von Sonarsensoren 30, welcher beispielsweise um 7 m nach unten ausgefahren und wieder eingefahren werden kann. Hierdurch ist im halbgetauchtem Zustand mit ausgefahrenem Kiel 20 eine sehr tiefe Anordnung der ersten Gruppe von Sonarsensoren 30 möglich. Im halbgetauchten Zustand ragt nur das obere Ende des Turm 40 über die Wasseroberfläche 50 und lediglich der Querschnitt des Turms 40 durchschneidet die Wasseroberfläche 50. Hierdurch wird eine sehr stabile Lage des Wasserfahrzeugs 10 erreicht. Für den Antrieb weist das erste Wasserfahrzeug 10 einen Dieselgenerator 60 auf, dessen Strom einen Fahrmotor 70 antreibt, der wiederum über eine Welle einen Propeller 100 antreibt. Treibstoff bezieht der Dieselgenerator 60 aus dem Dieseltank 80. Frischluft nimmt der Dieselgenerator 60 durch eine Frischluftzufuhr und Abgasabluft 90, welche durch den Turm 40 läuft, auf und gibt über diese die Abluft wieder ab. Im Bug des Wasserfahrzeugs 10 ist ein Bugsonar 110 angeordnet. Weiter weist das erste Wasserfahrzeug 10 ein Waffenrohr 120 zur Aufnahme eines Leichtgewichttorpedos auf. Am oberen Ende des Turms 40 und damit dauerhaft oberhalb der Wasseroberfläche 50 ist eine erste Kommunikationsvorrichtung 130 in Form einer Satellitenkommunikation angeordnet. Weiter weist das erste Wasserfahrzeug 10 bei Regelzellen 140 auf, über die in Tiefgang geregelt werden kann. Hierzu wird Wasser aus der Umgebung in die Regelzellen 140 gepumpt oder aus den Regelzellen 140 in die Umgebung abgegeben. Hierdurch kann insbesondere bei halbgetauchter Fahrt der Tiefgang auch über längere Zeit konstant gehalten werden.

Beispielsweise hat der Schiffskörper des Wasserfahrzeugs 10 einen Durchmesser von 5 m, der Turm 40 eine Höhe von 7 m über dem Schiffskörper und der Kiel kann beispielsweise 7 m unter den Schiffskörper ausgefahren werden. Somit würde die erste Gruppe von Sonarsensoren 30 etwa 15 m bis 16 m unter der Wasseroberfläche 50 sehr stabil angeordnet werden, was eine Ortung eines zu verfolgenden Unterseebootes deutlich erleichtert. Gleichzeitig würde ein minimaler Tiefgang von etwa 6 m den Zugang zu den meisten Häfen gewähren.

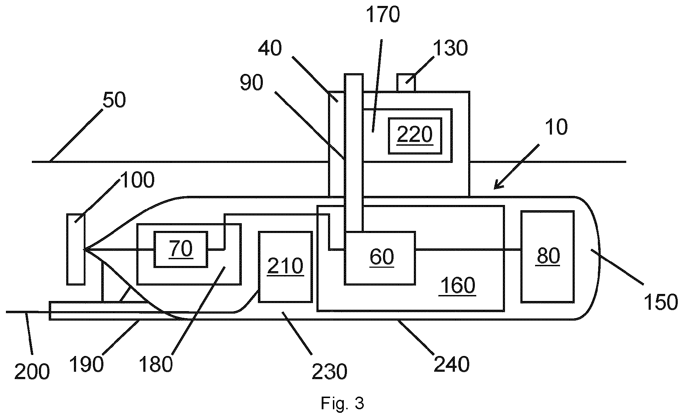

In Fig. 3 ist ein zweites Wasserfahrzeug 10 gezeigt. Das zweite Wasserfahrzeug 10 weist einen Schiffsrumpf 150 und einen Turm 40 auf. Im Schiffsrumpf 150 sin ein erster wasserdichter Rumpfbereich 160, ein zweiter wasserdichter Rumpfbereich 180 und ein erster wasserdurchfluteter Rumpfbereich 230. Im ersten wasserdichten Rumpfbereich 160 ist ein Dieselgenerator 60 angeordnet, der über die Frischluftzufuhr und Abgasabluft 90, welche durch den Turm 40 verläuft, mit Umgebungsluft versorgt wird und Abgase abgeben kann. Treibstoff erhält der Dieselgenerator 60 aus einem Dieseltank 80, welcher im ersten wasserdurchfluteten Rumpfbereich 230 angeordnet ist. Angetrieben wird das Wasserfahrzeug 10 mit Hilfe des Fahrmotors 70, welcher im zweiten wasserdichten Rumpfbereich 180 angeordnet ist und den Propeller 100 antreibt. Zwischen dem ersten wasserdichten Rumpfbereich 160 und dem zweiten wasserdichten Rumpfbereich 180 ist eine Aufnahmevorrichtung 210 für das Schleppsonar 200 angeordnet. Damit das Schleppsonar 200 problemfrei an dem Propeller 100 vorbeigeführt werden kann, verläuft das Schleppsonar 200 durch den Skeg 190. Die durch das Schleppsonar 200 erfassten Daten werden in der Sonarauswerteelektronik 220 ausgewertet, welche im ersten wasserdichten Turmbereich 170 angeordnet ist. Die Sonardaten können dann von Sonarauswerteelektronik 220 über die erste Kommunikationsvorrichtung 130 an ein begleitendes Schiff übertragen werden.

### Bezugszeichen

- 10: Wasserfahrzeug
- 20: Kiel
- 30: erste Gruppe von Sonarsensoren
- 40: Turm
- 50: Wasseroberfläche
- 60: Dieselgenerator
- 70: Fahrmotor
- 80: Dieseltank
- 90: Frischluftzufuhr und Abgasabluft
- 100: Propeller
- 110: Bugsonar
- 120: Waffenrohr
- 130: erste Kommunikationsvorrichtung
- 140: Regelzelle
- 150: Schiffsrumpf
- 160: erster wasserdichter Rumpfbereich
- 170: erster wasserdichter Turmbereich
- 180: zweiter wasserdichter Rumpfbereich
- 190: Skeg
- 200: Schleppsonar
- 210: Aufnahmevorrichtung
- 220: Sonarauswerteelektronik
- 230: erster wasserdurchfluteter Rumpfbereich
- 240: Außenhülle

## Patentansprüche

1. Wasserfahrzeug (10), wobei das Wasserfahrzeug (10) als Halbtaucherboot ausgeführt ist, wobei das Wasserfahrzeug (10) für den unbemannten Betrieb ausgelegt ist, wobei das Wasserfahrzeug (10) einen Schiffsrumpf (150) und einen auf dem Schiffsrumpf (150) angeordneten Turm (40) aufweist, wobei der Schiffsrumpf (150) wenigstens einen ersten wasserdichten Rumpfbereich (160) und wenigstens einen ersten wasserdurchfluteten Rumpfbereich (230) aufweist, wobei das Wasserfahrzeug (10) eine Antriebseinheit in dem ersten wasserdichten Rumpfbereich (160) aufweist, wobei das Wasserfahrzeug (10) wenigstens ein erstes Sonar zur Detektion von Unterseebooten aufweist, wobei das Wasserfahrzeug (10) im Turm (40) wenigstens einen ersten wasserdichten Turmbereich (170) aufweist, wobei der Turm (40) bei halbgetauchter Fahrt die Wasseroberfläche (50) durchtrennt, wobei der Turm oberhalb der Wasserlinie eine Verbreiterung aufweist, wobei die Verbreiterung in Schiffslängsrichtung, quer zur Schiffslängsrichtung oder sowohl in Schiffslängsrichtung als auch quer zur Schiffslängsrichtung angeordnet ist.

2. Wasserfahrzeug (10) nach Anspruch 1, **dadurch gekennzeichnet, dass** das Wasserfahrzeug (10) ein Schleppsonar (200) aufweist, wobei eine Aufnahmevorrichtung (210) für das Schleppsonar (200) in dem ersten wasserdurchfluteten Rumpfbereich (230) angeordnet ist.

3. Wasserfahrzeug (10) nach Anspruch 2, **dadurch gekennzeichnet, dass** das Wasserfahrzeug (10) eine Führung für das Schleppsonar (200) aufweist.

4. Wasserfahrzeug (10) nach einem der vorstehenden Ansprüche, **dadurch gekennzeichnet, dass** das Wasserfahrzeug (10) eine Sonarauswerteelektronik (220) aufweist, wobei die Sonarauswerteelektronik (220) im ersten wasserdichten Turmbereich (170) angeordnet ist.

5. Wasserfahrzeug (10) nach einem der vorstehenden Ansprüche, **dadurch gekennzeichnet, dass** die Antriebseinheit einen Dieselgenerator (60) und einen Fahrmotor (70) aufweist, wobei der Turm (40) wenigstens eine Frischluftzufuhr und eine Abgasabluft aufweist.

6. Wasserfahrzeug (10) nach Anspruch 5, **dadurch gekennzeichnet, dass** die Abgasabluft einen Schwanenhals aufweist.

7. Wasserfahrzeug (10) nach einem der vorstehenden Ansprüche, **dadurch gekennzeichnet, dass** wenigstens ein erster Dieseltank (80) in dem wasserdurchfluteten Rumpfbereich (230) angeordnet ist.

8. Wasserfahrzeug (10) nach Anspruch 7, **dadurch gekennzeichnet, dass** alle Dieseltanks (80) in dem wasserdurchfluteten Rumpfbereich (230) angeordnet sind, wobei die Dieseltanks (80) entweder paarweise steuerbord und backbord gegenüberliegend oder auf der Längsachse angeordnet sind.

9. Wasserfahrzeug (10) nach einem der Ansprüche 7 bis 8, **dadurch gekennzeichnet, dass** die Dieseltanks (80) selbstkompensierend ausgebildet sind.

10. Wasserfahrzeug (10) nach einem der vorstehenden Ansprüche, **dadurch gekennzeichnet, dass** das Wasserfahrzeug (10) einen nach unten ausfahrbaren Kiel (20) aufweist, wobei in dem nach unten ausfahrbarem Kiel (20) wenigstens eine erste Gruppe von Sonarsensoren (30) angeordnet sind, wobei der ausfahrbare Kiel (20) wenigstens 2 m, bevorzugt wenigstes 3 m, besonders bevorzugt wenigstens 5 m ausfahrbar ist, wobei der ausfahrbare Kiel (20) höchstens 15 m, bevorzugt höchstens 10 m ausfahrbar ist.

11. Wasserfahrzeug (10) nach einem der vorstehenden Ansprüche, **dadurch gekennzeichnet, dass** das Wasserfahrzeug (10) wenigstens eine Regelzelle (140) zur Kontrolle des Tiefgangs aufweist.

12. Wasserfahrzeug (10) nach einem der vorstehenden Ansprüche, **dadurch gekennzeichnet, dass** das Wasserfahrzeug (10) ein unbemanntes Wasserfahrzeug (10) ist, wobei das Wasserfahrzeug (10) eine erste Kommunikationsvorrichtung (130) aufweist, wobei die erste Kommunikationsvorrichtung (130) permanent oberhalb der Wasseroberfläche (50) angeordnet ist.

13. Wasserfahrzeug (10) nach einem der vorstehenden Ansprüche, **dadurch gekennzeichnet, dass** der Schiffsrumpf (150) eine Außenhülle (240) aus einem faserverstärken Kunststoff aufweist.

14. Wasserfahrzeug (10) nach einem der vorstehenden Ansprüche, **dadurch gekennzeichnet, dass** das Wasserfahrzeug (10) eine tragende Rahmenstruktur aufweist.

## Claims

1. Watercraft (10), wherein the watercraft (10) is designed as a semi-submersible boat, wherein the watercraft (10) is designed for unmanned operation, wherein the watercraft (10) has a hull (150) and a turret (40) arranged on the hull (150), wherein the hull (150) has at least one first watertight hull region (160) and at least one first water-flooded hull region (230), the watercraft (10) having a drive unit in the first watertight hull region (160), the watercraft (10) having at least a first sonar for detecting submarines, wherein the watercraft (10) has at least one first watertight tower section (170) in the tower (40), wherein the tower (40) cuts through the water surface (50) during semi-submerged travel, wherein the tower a widening above the waterline has, wherein the widening in the longitudinal direction of the vessel, transversely to the longitudinal direction of the vessel, or both in the longitudinal direction of the vessel and transversely to the longitudinal direction of the vessel is arranged.

2. Watercraft (10) according to claim 1, **characterised in that** the watercraft (10) has a towing sonar (200), wherein a receiving device (210) for the towing sonar (200) is arranged in the first water-flooded hull region (230).

3. Watercraft (10) according to claim 2, **characterised in that** the watercraft (10) has a guide for the towing sonar (200).

4. Watercraft (10) according to one of the preceding claims, **characterised in that** the watercraft (10) has sonar evaluation electronics (220), the sonar evaluation electronics (220) being arranged in the first watertight turret region (170).

5. Watercraft (10) according to one of the preceding claims, **characterised in that** the propulsion unit has a diesel generator (60) and a traction engine (70), wherein the turret (40) has at least one fresh air supply and one exhaust gas exhaust.

6. Watercraft (10) according to claim 5, **characterised in that** the exhaust gas exhaust air has a swan neck.

7. Watercraft (10) according to one of the preceding claims, **characterised in that** at least one first diesel tank (80) is arranged in the water-flooded hull region (230).

8. Watercraft (10) according to claim 7, **characterised in that** all diesel tanks (80) are arranged in the water-flooded hull region (230), the diesel tanks (80) being arranged either in pairs starboard and port opposite one another or on the longitudinal axis.

9. Watercraft (10) according to one of claims 7 to 8, **characterised in that** the diesel tanks (80) are designed to be self-compensating.

10. Watercraft (10) according to one of the preceding claims, **characterised in that** the watercraft (10) has a downwardly extendable keel (20), at least a first group of sonar sensors (30) being arranged in the downwardly extendable keel (20), the extendable keel (20) being extendable by at least 2 m, preferably at least 3 m, particularly preferably at least 5 m, the extendable keel (20) being extendable by at most 15 m, preferably at most 10 m.

11. Watercraft (10) according to one of the preceding claims, **characterised in that** the watercraft (10) has at least one control cell (140) for controlling the draught.

12. Watercraft (10) according to one of the preceding claims, **characterised in that** the watercraft (10) is an unmanned watercraft (10), wherein the watercraft (10) comprises a first communication device (130), wherein the first communication device (130) is permanently arranged above the water surface (50).

13. Watercraft (10) according to one of the preceding claims, **characterised in that** the hull (150) has an outer shell (240) made of a fibre-reinforced plastic.

14. Watercraft (10) according to one of the preceding claims, **characterised in that** the watercraft (10) comprises a load-bearing frame structure.

## Revendications

1. Embarcation (10), dans laquelle l'embarcation (10) est conçue comme un bateau semi-submersible, dans laquelle l'embarcation (10) est conçue pour fonctionner sans équipage, dans laquelle l'embarcation (10) comporte une coque (150) et une tourelle (40) disposée sur la coque (150), dans laquelle la coque (150) comporte au moins une première zone de coque étanche (160) et au moins une première zone de coque inondée (230), l'embarcation (10) comportant une unité de propulsion dans la première zone de coque étanche (160), l'embarcation (10) comportant au moins un premier sonar pour détecter des sous-marins, dans lequel l'embarcation (10) comporte au moins une première section de tourelle étanche (170) dans la tourelle (40), la tour (40) perçant la surface de l'eau (50) lors d'un déplacement semi-immergé, la tour présentant un élargissement au-dessus de la ligne de flottaison, cet élargissement étant disposé dans la direction longitudinale du navire, transversalement à la direction longitudinale du navire, ou à la fois dans la direction longitudinale du navire et transversalement à la direction longitudinale du navire.

2. Embarcation (10) selon la revendication 1, **caractérisée en ce que** l'embarcation (10) comporte un sonar remorqué (200), dans laquelle un dispositif de réception (210) pour le sonar remorqué (200) est disposé dans la première zone de coque inondée (230).

3. Embarcation (10) selon la revendication 2, **caractérisée en ce que** l'embarcation (10) comporte un guide pour le sonar remorqué (200).

4. Embarcation (10) selon l'une des revendications précédentes, **caractérisée en ce que** l'embarcation (10) comporte une électronique d'évaluation de sonar (220), l'électronique d'évaluation de sonar (220) étant disposée dans la première zone de tourelle étanche (170).

5. Embarcation (10) selon l'une des revendications précédentes, **caractérisée en ce que** l'unité de propulsion comporte un générateur diesel (60) et un moteur de traction (70), la tourelle (40) comportant au moins une arrivée d'air frais et une évacuation des gaz d'échappement.

6. Embarcation (10) selon la revendication 5, **caractérisée en ce que** l'air d'échappement des gaz d'échappement comporte un col de cygne.

7. Embarcation (10) selon l'une des revendications précédentes, **caractérisée en ce qu'**au moins un premier réservoir de diesel (80) est disposé dans la zone de coque inondée (230).

8. Embarcation (10) selon la revendication 7, **caractérisée en ce que** tous les réservoirs de diesel (80) sont disposés dans la zone de la coque inondée (230), les réservoirs de diesel (80) étant disposés soit par paires à tribord et à bâbord en vis-à-vis, soit sur l'axe longitudinal.

9. Embarcation (10) selon l'une des revendications 7 à 8, **caractérisée en ce que** les réservoirs de gazole (80) sont conçus pour être à compensation automatique.

10. Embarcation (10) selon l'une des revendications précédentes, **caractérisée en ce que** l'embarcation (10) comporte une quille (20) pouvant s'étendre vers le bas, au moins un premier groupe de capteurs sonar (30) étant disposé dans la quille (20) pouvant s'étendre vers le bas, la quille extensible (20) pouvant s'étendre sur au moins 2 m, de préférence au moins 3 m, de manière particulièrement préférée au moins 5 m, la quille extensible (20) pouvant s'étendre sur au plus 15 m, de préférence au plus 10 m.

11. Embarcation (10) selon l'une des revendications précédentes, **caractérisée en ce que** l'embarcation (10) comporte au moins une cellule de commande (140) pour commander le tirant d'eau.

12. Embarcation (10) selon l'une des revendications précédentes, **caractérisée en ce que** l'embarcation (10) est une embarcation sans pilote (10), dans laquelle l'embarcation (10) comprend un premier dispositif de communication (130), le premier dispositif de communication (130) étant disposé de manière permanente au-dessus de la surface de l'eau (50).

13. Embarcation (10) selon l'une des revendications précédentes, **caractérisée en ce que** la coque (150) comporte une enveloppe extérieure (240) en plastique renforcé de fibres.

14. Embarcation (10) selon l'une des revendications précédentes, **caractérisée en ce que** l'embarcation (10) comprend une structure de châssis porteuse.
